# EUROPEAN PATENT APPLICATION

(11) **EP 2 348 392 A1**
(43) Date of publication of application: **27.07.2011**
(21) Application number: 10151343.0
(22) Date of filing: 21.01.2010
(51) Int. Cl.: G06F 3/048

(54) **Portable electronic device and method of controlling same**

(71) Applicant: RESEARCH IN MOTION LIMITED, Waterloo, Ontario N2L 3W8 (CA)
(72) Inventor: King, Benjamin John, Irving TX 75039 (US)
(74) Representative: Fennell, Gareth Charles

(57) **Abstract**

A method includes displaying a first part of information on a touch-sensitive display of a portable electronic device, detecting a gesture on the touch-sensitive display, determining attributes of the gesture, when the gesture comprises a first type gesture, performing an imaging function on the information, and when the gesture comprises a second type gesture, selecting and performing a function.

## Description

### FIELD OF TECHNOLOGY

The present disclosure relates to a portable electronic device including a touch screen display and control of the electronic device.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive or touchscreen devices are desirable.

### SUMMARY

A method includes displaying a first part of information on a touch-sensitive display of a portable electronic device, detecting a gesture on the touch-sensitive display, determining attributes of the gesture, when the gesture comprises a first gesture type, performing an imaging function on the information, and when the gesture comprises a second gesture type, selecting and performing a function.

A computer-readable medium has computer-readable code executable by at least one processor of a portable electronic device to perform the above method.

A portable electronic device includes a touch-sensitive display configured to display a first part of information and a processor operably coupled to the touch-sensitive display to detect and determine attributes of a gesture on the touch-sensitive display, when the gesture comprises a multiple touch gesture, perform an imaging function on the information, and when the gesture comprises a single touch gesture, select and perform a function.

### BRIEF DESCRIPTION OF THE DRAWINGS

FIG. 1 is a block diagram of a portable electronic device in accordance with the present disclosure.

FIG. 2 is a flowchart illustrating a method of controlling a portable electronic device in accordance with the present disclosure.

FIG. 3 illustrates examples of an electronic device including a touch-sensitive display before and after performing an imaging function in accordance with the present disclosure.

FIG. 4 and FIG. 5 illustrate examples of an electronic device including a touch-sensitive display before and after selecting a feature and performing a function in accordance with the present disclosure.

### DETAILED DESCRIPTION

The following describes a method including displaying a first part of information on a touch-sensitive display of a portable electronic device, detecting a gesture on the touch-sensitive display, determining attributes of the gesture, when the gesture is a multiple touch gesture, performing an imaging function on the information, and when the gesture is a single touch gesture, selecting and performing a function.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

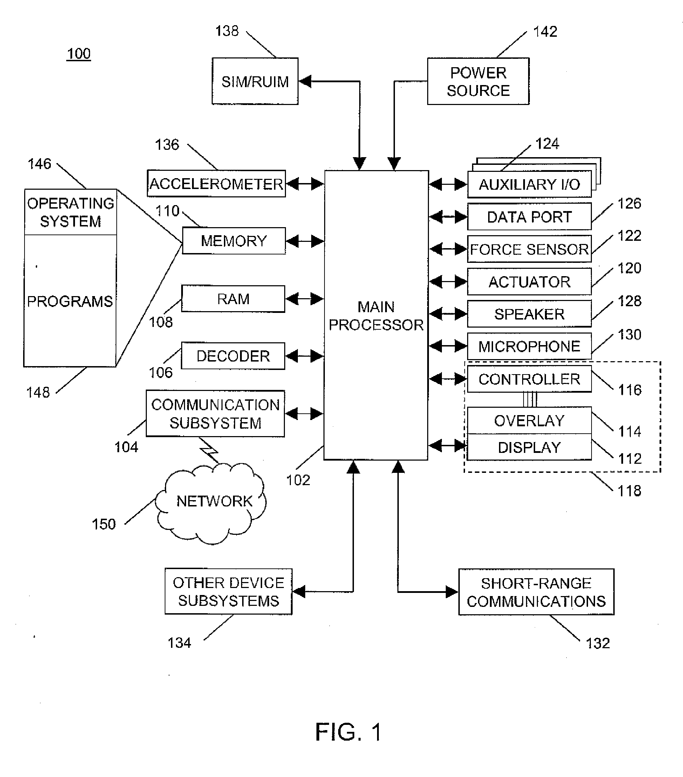

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 provides the user with tactile feedback.

Optionally, a mechanical dome switch actuator may be utilized to provide tactile feedback when the dome collapses due to imparted force and when the dome returns to the rest position after release of the switch.

Alternatively, the actuator 120 may comprise one or more piezoelectric (piezo) actuators that provide tactile feedback. Contraction of the piezo actuator(s) applies a spring-like force against the touch-sensitive display 118, opposing any force externally applied to the display 118. Each piezo actuator 120 includes a piezoelectric device, such as a piezoelectric ceramic disk adhered to a substrate, such as a metal substrate. The substrate bends when the disk contracts diametrically due to build up of charge at the disk or in response to an external force applied to the touch-sensitive display 118. The charge may be adjusted by varying the applied voltage or current, thereby controlling the force applied by the piezo disks on the touch-sensitive display 118. The charge on the piezo actuator may be removed by a controlled discharge current that causes the disk to expand diametrically, releasing the force thereby decreasing the force applied by the piezo actuator on the touch-sensitive display 118. The charge may advantageously be removed over a relatively short period of time to provide tactile feedback to the user. Absent an external force applied to the overlay 114 and absent a charge on the piezoelectric disk, the piezoelectric disk may be slightly bent due to a mechanical preload.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts, may be detected by the touch-sensitive display 118 and processed by the processor 102, for example, to determine attributes of the touch including the touch location. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x location component may be determined by a signal generated from one touch sensor layer, and the y location component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. Multiple touches may occur simultaneously and may be detected as separate touches. Optionally, multiple touches may be determined to be multiple touches based on attributes including the size of the touch, for example, where two touches are very close together and are not otherwise detected as multiple touches.

A gesture also known as a touch event includes a single touch, a multiple touch, a swipe, which may be a single swipe or a multiple swipe, a pinch, a pull, a single tap, a double tap, a rotation, and any other suitable gesture . For example, a swipe, also known as a flick, begins at an origin and continues to a finish, spaced from the origin, while touch contact is maintained. A gesture may be long or short in distance or duration or both distance and duration. A gesture may also be detected by the touch-sensitive display 118, For a swipe, two points of the swipe are utilized to determine a vector that describes a direction of the swipe. The direction may be referenced to the touch-sensitive display 118, the orientation of the information displayed on the touch-sensitive display 118, or another reference. The endpoints of the swipe are utilized to determine a magnitude or distance of the swipe, and a duration of the swipe may be determined from the endpoints of the swipe in time. The controller 116 and/or the processor 102 determine the attributes of the swipe, including the direction and the magnitude or duration of the swipe. The controller 116 and/or the processor 102 are also configured to determine when multiple simultaneous gestures, referred to as multiple touch gestures, occur and when a single gesture, referred to as a single touch gesture, occurs. The controller 116 and/or the processor 102 are configured to distinguish between a single touch gesture and a multiple touch gesture.

A pinch gesture and a pull gesture are particular types of multiple touch gestures on the touch-sensitive display 118 that begin with two touches separated by a distance that is decreased or increased. A pinch gesture is detected when the distance between the two touches is decreased and a pull gesture is detected when the distance between the two touches is increased. The controller 116 and/or the processor 102 determine the attributes of the pinch gesture or pull gesture including the magnitude or duration of the pinch or pull.

A touch sensitive display 118 on a portable electronic device 100 is typically relatively small and the amount of information displayed from an application may be less than the amount of information that may be displayed on a computer monitor or other larger display. The amount of information available to be displayed is based on the screen size and memory capability of the device controlling the display of information. The amount of available information may be more than fits on a display, and a user may scroll or pan through the available information. Downloading more information takes time.

The information may be information from an application, such as a web browser, contacts, email, calendar, music player, spreadsheet, word processing, operating system interface, and so forth. For example, a web page may include information that does not fit on the touch-sensitive display 118 and only a part of the information is displayed. A panning operation may be performed to view another part of the web page.

Selectable features, such as a scroll bar or links to other web pages, may be included in one or more columns, such as in a text column. Different information may be retrieved and displayed when any of the features is selected. For example, an alternative page may be retrieved and displayed, a different image within the information may be retrieved and displayed, and/or different text information may be retrieved and displayed.

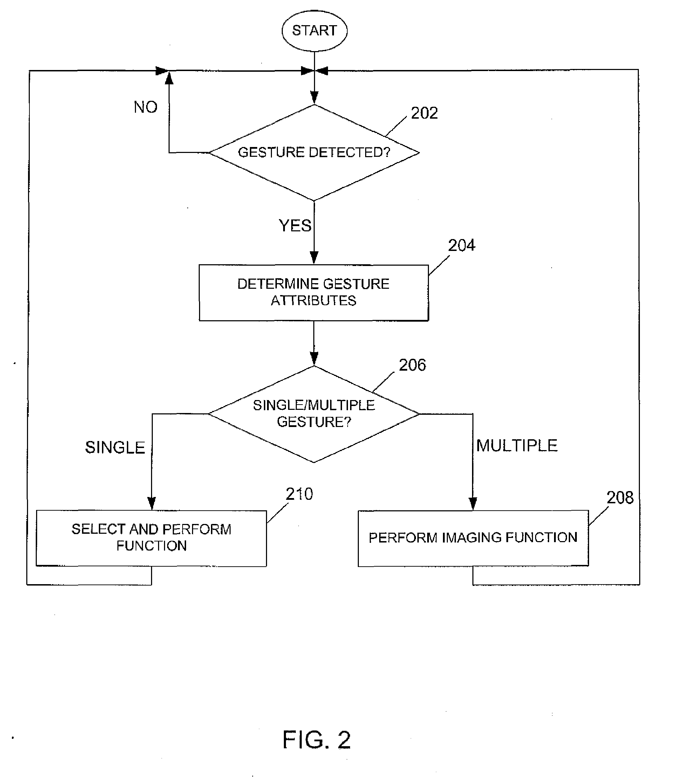

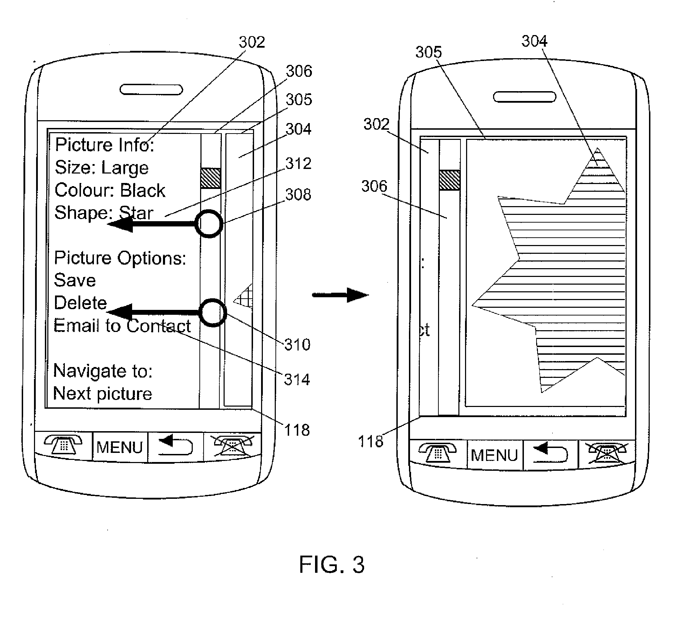

A flowchart illustrating a method of controlling an electronic device 100 is shown in FIG. 2. The method may be carried out by software executed by, for example, the processor 102. Coding of software for carrying out such a method is within the scope of a person of ordinary skill in the art given the present description. The flowchart of FIG. 3 is simplified for the purpose of explanation. Additional or fewer processes may be carried out and the processes described and illustrated in FIG. 2 may be carried out in a different order. Information is generally displayed on the touch-sensitive display 118 of the portable electronic device 100. The information may be updated at various times, and the display of the information is ongoing. A first part of the information is displayed on the touch-sensitive display 118. When a gesture is detected 202, the attributes of the gesture are determined 204. The attributes may include location of a point or points along the path of the gesture, the size of the touch also referred to as the area of touch contact, the direction of the gesture, and so forth. From the attributes of the gesture, the gesture type is determined, for example, a single touch gesture or a multiple touch gesture. When the gesture is a multiple touch gesture, an imaging function such as a pan, zoom, or scroll function is performed 208 on the information. For example, displayed information, such as an image, may be manipulated by panning up, down, to the left, to the right, or any other direction, or by zooming in or out. When the gesture is a single touch gesture, a feature such as a scroll bar, an image, a link, a field, and so forth, is selected 210 and a function is performed. For example, a scroll bar may be dragged, a menu selected, a button selected, and so forth.

A front view of an example of a portable electronic device 100 including a touch-sensitive display 118 before and after performing an imaging function is shown in FIG. 3. In this example, a part of a web page is displayed on the touch-sensitive display 118 in a web browser application. Two columns of the web page are displayed on the touch-sensitive display 118, including a text column 302 and a part of an adjacent image 304 in an image frame 305. To facilitate scrolling to different information, a touch-sensitive scroll bar 306 is provided. The origins 308, 310 of a multiple touch swipe are shown, and the direction of the multiple touch swipe is from right to left on the touch-sensitive display 118, as indicated by the arrows 312, 314. When this multiple touch swipe is detected, a panning operation is performed to view more of the image 304 and image frame 305 and less of the text column 302, as shown in the right illustration of FIG. 3. The panning operation may be repeated. A panning operation may be performed to return to the view shown in the left illustration of FIG. 3. The length of the swipe by distance may be utilized to determine how far to pan the web page view. Alternatively, the length of the swipe by time duration may be utilized to determine how far to pan the web page view.

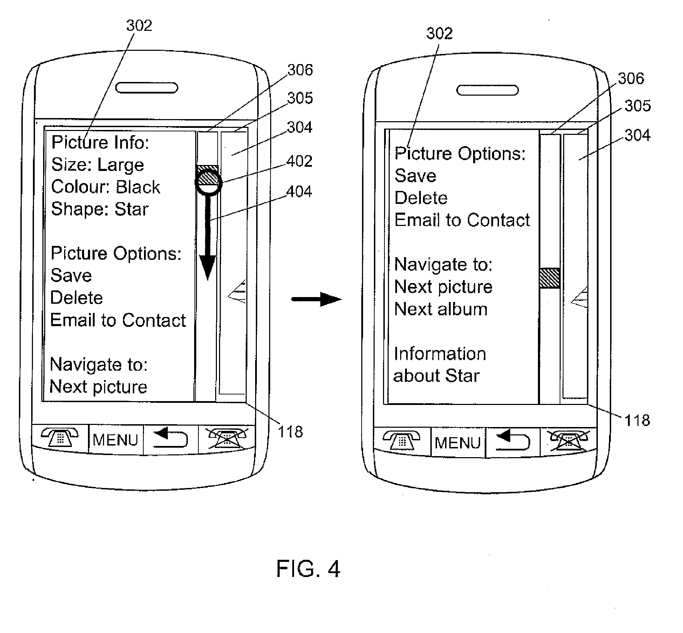

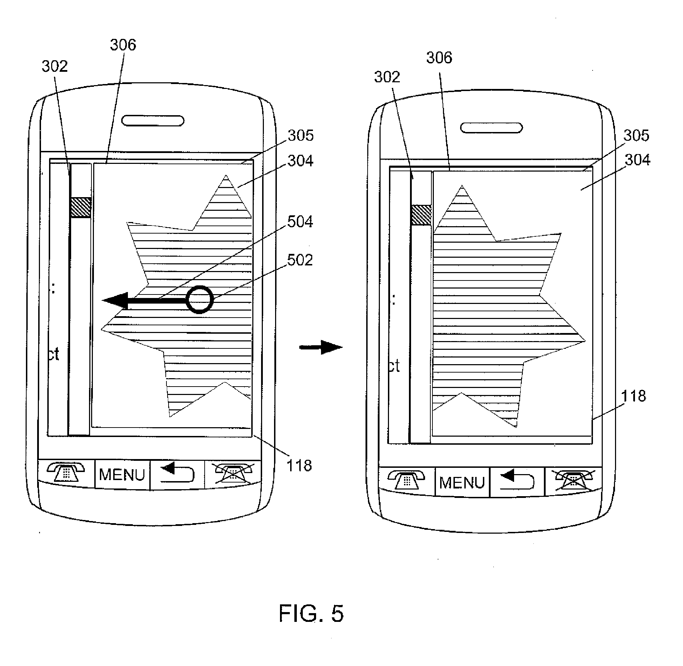

A front view of the portable electronic device 100 including the touch-sensitive display before and after selecting a feature and performing a function is shown in FIG. 4 and FIG. 5. The left illustration of FIG. 4 shows the origin 402 of a single touch on the scroll bar 306 and movement of the touch in a vertical direction, e.g., from top to bottom on the touch-sensitive display 118, as indicated by the arrow 404. When this single touch is detected, the scroll bar is selected and the text in the text column 302 is scrolled in a downward direction by retrieving and displaying different text in the text column 302. The image 304 and the image frame 305 remain in the same location on the touch-sensitive display 118, as shown in the right illustration of FIG. 4. The scrolling operation may be repeated. A scrolling operation may be performed to return to the top of the text as shown in the left illustration of FIG. 4. The distance of the movement of the touch may be utilized to determine how far to scroll the text. Alternatively, the duration in time of the touch may be utilized to determine how far to scroll the text.

FIG. 5 shows a view of the web page, for example, after the panning operation of FIG. 3. The left illustration of FIG. 5 shows the origin 502 of a single touch swipe on the image 304 and the direction of the single touch swipe is horizontal from right to left on the touch-sensitive display 118, as indicated by the arrow 504. When the single touch swipe is detected, the image 304 is selected and the image 304 is moved within the frame 305 by retrieving, for example, by downloading or by retrieving from memory, and displaying different image information. The text column 302 and text remain in the same location on the touch-sensitive display 118, as shown in the right illustration of FIG. 5. The image selection may be repeated to continue to move the image 304 within the frame 305. The length of the swipe by distance is utilized to determine what image information is retrieved and displayed within the frame 305. Alternatively, the length of the swipe by time duration may be utilized to determine what image information is retrieved and displayed within the frame 305.

The control of the portable electronic device facilitates the display of parts of information and the retrieval and display of different information. Single and multiple touch gestures may be detected and distinguished between. Distinguishing between single and multiple touch gestures facilitates performance of imaging functions such as panning, zooming, and scrolling without utilizing a scroll bar and facilitates selection of features such as a scroll bar, an image, a link, a field, and so forth, within the information to perform a function. Gestures may be distinguished between for performing an imaging operation or for selecting and performing a function without requiring a further action, such as selection of a button, menu, or other time-consuming method, to switch modes. Power requirements may be reduced by reducing device use time.

Although the flowchart and the examples above distinguish the type of gesture between a single-touch gesture and a multiple-touch gesture, other attributes of the gesture may be utilized to distinguish the type, such as the direction of the gesture, origin or finish of gesture, location of the gesture, size of the gesture, length of the gesture, contact area of the gesture, duration of the gesture, and so forth.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying a first part of information on a touch-sensitive display of a portable electronic device;
detecting a gesture on the touch-sensitive display; determining attributes of the gesture;
when the gesture comprises a first gesture type, performing an imaging function on the information; and
when the gesture comprises a second gesture type, selecting and performing a function.

2. The method according to claim 1, wherein selecting comprises selecting a feature comprising one of a scroll bar, an image, a link, and a field.

3. The method according to claim 1, wherein performing an imaging function comprises displaying a second part of the information on the touch-sensitive display.

4. The method according to claim 1, wherein performing an imaging function comprises carrying out at least one of a zooming operation, a panning operation, and a scrolling operation.

5. The method according to claim 1, wherein performing a function comprises retrieving and displaying different information.

6. The method according to claim 1, wherein determining attributes comprises determining an area of contact of the touch event.

7. The method according to claim 5, comprising determining that the touch event comprises one of a multiple touch event and a single touch event based on the area of contact.

8. The method according to claim 1, wherein determining attributes comprises determining a direction of the gesture.

9. The method according to claim 1, wherein the information comprises information from a web page.

10. The method according to claim 1, wherein the first gesture type is a multiple touch gesture and the second gesture type is a single touch gesture.

11. A computer-readable medium having computer-readable code executable by at least one processor of a portable electronic device to perform the method of claim 1.

12. A portable electronic device comprising:
a touch-sensitive display configured to display a first part of information;
a processor operably coupled to the touch-sensitive display to:
detect and determine attributes of a gesture on the touch-sensitive display;
when the gesture comprises a multiple touch gesture, perform an imaging function on the information; and
when the gesture comprises a single touch gesture, select and perform a function.

13. The electronic device according to claim 12, wherein when the gesture comprises a single touch gesture, select comprises selection of one of a scroll bar, an image, a link, and a field.

14. The electronic device according to claim 12, wherein the imaging function comprises at least one of a zooming operation, a panning operation, and a scrolling operation to display the second part of the information.

15. The electronic device according to claim 12, wherein the processor is configured to determine whether the touch event comprises a multiple touch event or a single touch event based on an area of contact.

## Amended claims

### Amended claims in accordance with Rule 137(2) EPC.

**1.** A method comprising:
displaying a first part of information on a touch-sensitive display (118) of a portable electronic device (100);
detecting a gesture on the touch-sensitive display (118);
determining attributes of the gesture;
when the gesture comprises a first gesture type, performing an imaging function on the information;
when the gesture comprises a second gesture type, selecting and performing a function;
wherein the first gesture type comprises a different number of touches than the second gesture type.

**2.** The method according to claim 1, wherein selecting comprises selecting a feature comprising one of a scroll bar, an image, a link, and a field.

**3.** The method according to claim 1, wherein performing an imaging function comprises displaying a second part of the information on the touch-sensitive display (118).

**4.** The method according to claim 1, wherein performing an imaging function comprises carrying out at least one of a zooming operation, a panning operation, and a scrolling operation.

**5.** The method according to claim 1, wherein performing a function comprises retrieving and displaying different information.

**6.** The method according to claim 1, wherein determining attributes comprises determining an area of contact of the gesture.

**7.** The method according to claim 5, comprising determining that the gesture comprises is the multiple touch gesture or the single touch gesture based on the area of contact.

**8.** The method according to claim 1, wherein determining attributes comprises determining a direction of the gesture.

**9.** The method according to claim 1, wherein the information comprises information from a web page.

**10.** The method according to claim 1, wherein the first gesture type is a multiple touch gesture and the second gesture type is a single touch gesture.

**11.** A computer-readable medium having computer-readable code executable by at least one processor (102) of a portable electronic device (100) to perform the method of claim 1.

**12.** A portable electronic device (100) comprising:
a touch-sensitive display (118) configured to display a first part of information;
a processor (102) operably coupled to the touch-sensitive display (118) to:
detect and determine attributes of a gesture on the touch-sensitive display (118);
when the gesture comprises afirst gesture type, perform an imaging function on the information;
when the gesture comprises a second gesture type, select and perform a function;
wherein the first gesture type comprises a different number of touches than the second gesture type.

**13.** The portable electronic device (100) according to claim 12, wherein when the gesture comprises a single touch gesture, select comprises selection of one of a scroll bar, an image, a link, and a field.

**14.** The portable electronic device (100) according to claim 12, wherein the imaging function comprises at least one of a zooming operation, a panning operation, and a scrolling operation to display the second part of the information.

**15.** The portable electronic device (100) according to claim 12, wherein the processor (102) is configured to determine whether the gesture comprises a multiple touch gesture or a single touch gesture based on an area of contact.
